# EUROPÄISCHE PATENTSCHRIFT

(11) **EP 2 533 002 B1**
(45) Veröffentlichungstag und Bekanntmachung des Hinweises auf die Patenterteilung: **03.10.2018**
(21) Anmeldenummer: 12004165.2
(22) Anmeldetag: 31.05.2012
(51) Int. Cl.: F41G 7/22, F16M 11/18

(54) **Suchkopf für einen zielverfolgenden Flugkörper**
Seeker for missile
Tête chercheuse pour corps volant

(30) Priorität: 09.06.2011 DE 102011103672
(43) Veröffentlichungstag der Anmeldung: 12.12.2012
(73) Patentinhaber: MBDA Deutschland GmbH, 86529 Schrobenhausen (DE)
(72) Erfinder: Kröner, Christoph, 85301 Schweitenkirchen (DE)
(74) Vertreter: Isarpatent

(56) Entgegenhaltungen:
- US-A- 3 995 933
- US-A- 4 282 529
- US-A- 4 324 378
- US-A- 4 392 140
- US-A- 4 520 973

## Beschreibung

### GEBIET DER ERFINDUNG

Die Erfindung betrifft einen zielverfolgenden Flugkörper. Insbesondere betrifft die Erfindung einen Suchkopf für einen zielverfolgenden Flugkörper und die Verwendung eines Suchkopfs in einem zielverfolgenden Flugkörper.

### HINTERGRUND DER ERFINDUNG

Zielverfolgende Flugkörper, wie beispielsweise unbemannte Kleinflugzeuge oder Raketen umfassen häufig ein optisches System, mit dem der Flugkörper ein Ziel, auf das er beispielsweise zufliegen soll, erfassen und verfolgen kann. Mit dem aus dem optischen System gewonnenen Daten kann der Flugkörper beispielsweise seine Flugrichtung korrigieren oder aber auch die ermittelten Daten über Funk an eine weitere Station, wie beispielsweise ein Flugzeug, das den Flugkörper abgeworfen hat, übertragen. Diese optischen Systeme umfassen in der Regel einen Suchkopf, mit dem die Sichtrichtung, in die das optische System blickt, relativ zum Flugkörper eingestellt werden kann. Eine wesentliche Größe ist dabei der sogenannte Schielwinkel, der als der Bereich definiert werden kann, in dem die Sichtrichtung des optischen Systems relativ zum Flugkörper ausgerichtet werden kann.

Bei bisher bekannten Suchköpfen kann ein großer Schielwinkel durch die Verwendung von Roll-Nickrahmen-Systemen erreicht werden. Der Nickrahmen ist meist rechtwinklig zur Rollachse ausgeführt und der Rollrahmen in Flugkörper-längsachse gelagert. Bei dieser Anordnung schwenkt die Lagerung des Nickrahmens immer mit der Rollbewegung mit und ist daher in der Regel nicht im optischen Strahlengang. Bei diesem System können große Schielwinkel mit relativ geringem mechanischem Aufwand erreicht werden. Ein Nachteil eines Roll-Nick-Rahmen-Systems kann die ausgeprägte Singularität der Rahmensteuerung in Flugkörper-Längsachse sein, da der Rollrahmen fast immer in Flugkörper-Längsachse gelagert ist. Dies kann eine verminderter Trefferwahrscheinlichkeit bei stehenden oder langsam bewegten Zielen bedeuten, die sich exakt vor der Flugkörper-Längsachse befinden. Ein Nachteil kann auch das deutlich aufwändigere optische System darstellen, da meist der Detektor fest eingebaut wird und der Strahl dann aufwändig um die Nick- und Rollachse geführt wird. Derartige optische Systeme sind meist durch mehrere Prismen und Spiegel verwirklicht, was höhere Herstellkosten sowie einen erheblichen Aufwand speziell im Bezug auf eine Temperatur- und Vibrationskompensation bedeuten kann. Ein weiterer Nachteil eines Roll-Nick-Rahmen-Systems kann die Verwendung von Schleifringen zur Versorgung des Nickrahmenantriebs sowie für die Rückmeldung einer Nickrahmen-Winkelposition zur Regelungselektronik darstellen. Schleifringe können ein hohes Risiko darstellen, da bei starken Vibrationen, wie sie bei Flugkörpern üblicherweise auftreten können, Schleifringarme temporär abheben können und das elektrische Signal unterbrochen oder die elektrisch leitende Beschichtung beschädigt werden kann.

Weiter werden Suchköpfe mit Nick-Gierrahmen verwendet. Bei Nick-Gierrahmen limitiert einer der Rahmen, üblicherweise der Gierrahmen, die Bewegungsfreiheit des anderen Rahmenelements, wenn die Lagerung durch den entsprechenden Drehpunkt des Rahmensystems erfolgt. Eine Bewegungsfreiheit von mehr als ± 90° ist mit einem derartigen Nick-Gierrahmen-System nicht möglich.

Die US 4 282 529 zeigt eine kardanische Aufhängung für ein optisches Gerät, das in einer Rakete eingesetzt werden kann. Die kardanische Aufhängung kann von einem endlosen Band angetrieben werden, das über die Achsen zweier Motoren verläuft. Der Gierrahmen der kardanischen Aufhängung ist in einer Rollenanordnung gelagert, die bezüglich der Gierachse Rollen innerhalb und außerhalb des Gierrahmens aufweist.

Die US 4 520 973 betrifft eine kardanische Aufhängung für einen Raketen-Suchkopf, der beispielsweise einen CCD-Sensor tragen kann. Ein Gierrahmen der kardanischen Aufhängung kann mit einem Antriebsband von einem Motor geschwenkt werden. Der Gierrahmen ist mittels mehrerer Rollenlager an einem Rahmen der Rakete abgestützt.

Die US 4 392 140 zeigt eine kardanische Aufhängung, deren Gierrahmen von einem Kabel bewegt werden kann, das seitlich am Gierrahmen befestigt ist und das von einem Motor angetrieben wird. Analog der US 4 282 529 ist der Gierrahmen in einer Rollenanordnung gelagert, die bezüglich der Gierachse Rollen auf beiden Seiten des Gierrahmens aufweist.

Die US 4 324 378 beschreibt eine kardanische Aufhängung, bei der ein Gierrahmen von einem Ritzel angetrieben wird und bei der der Gierrahmen von Rollen, die dem Ritzel gegenüberliegen, gehalten wird.

### ZUSAMMENFASSUNG DER ERFINDUNG

Aufgabe der Erfindung ist es, einen platzsparenden Suchkopf mit einem einfach aufgebauten optischen System bereitzustellen, der große Schielwinkel abdecken kann.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.
Ein erster Aspekt der Erfindung betrifft einen Suchkopf für einen zielverfolgenden Flugkörper, wie etwa eine Rakete oder ein unbemanntes Kleinflugzeug.

Erfindungsgemäß umfasst der Suchkopf einen Nickrahmen zur Aufnahme einer Detektorbaugruppe, einen Gierrahmen, in dem der Nickrahmen schwenkbar um eine erste Achse gelagert ist, und eine Basis, in der der Gierrahmen schwenkbar um eine zweite Achse gelagert ist. Damit kann die Detektorbaugruppe mit dem Nickrahmen um die erste Achse schwenken und zusammen mit dem Gierrahmen um die zweite Achse schwenken, um so die optische Achse der Detektorbaugruppe relativ zum Flugkörper auszurichten. Die erste Achse kann dabei orthogonal zur zweiten Achse sein. Die zweite Achse kann orthogonal zu einer Längsrichtung des Flugkörpers, in der sich der Flugkörper normalerweise bewegen wird, angeordnet sein.
Die Basis bzw. der Basisrahmen kann eine Baugruppe des Suchkopfs sein, die mechanisch starr mit dem Flugkörper verbunden werden kann.
Die Detektorbaugruppe kann dabei eine optische Detektorbaugruppe, beispielsweise ein Sucher sein, die dazu ausgeführt ist, Bilder im optischen bzw. im Infrarotbereich aufzunehmen. Mit anderen Worten kann die Detektorbaugruppe also eine Optik mit zugehöriger Kamera umfassen. Mit anderen Worten umfasst der Suchkopf ein nick-gier-gelagertes Rahmensystem, das einen optischen Sucher tragen kann. Der Suchkopf kann also einen von Flugkörperbewegungen entkoppelten, stabilisierten, abbildenden, optischen Sucher umfassen.

Erfindungsgemäß ist der Gierrahmen über eine Schiene an der Basis gelagert wobei sich die Schiene und der Gierrahmen zumindest teilweise derart um die zweite Achse herum erstrecken können, dass der Nickrahmen einen Schwenkbereich von wenigstens 180° aufweist. Insbesondere können sich die Schiene und der Gierrahmen nur teilweise um die zweite Achse erstrecken, so dass ein Abschnitt um die zweite Achse frei bleibt, durch den die Detektorbaugruppe, die sich im Gierrahmen befindet, nach außen blicken kann.
Durch die Schiene, mit der der Gierrahmen an der Basis gelagert ist, wird sozusagen ein virtuelles Lager gebildet, das einen virtuellen Drehpunkt aufweist, der aber nicht von mechanischen Komponenten des Lagers eingenommen wird. Auf diese Weise kann zumindest ein Teil der Detektorbaugruppe auch in den Bereich des virtuellen Drehpunkts schwenken. Somit kann bei einem Nick-Gierrahmen-System, so wie es der Suchkopf aufweist, ein sehr großer Schielwinkel von mehr als ±90° erreicht werden, in dem der Nickrahmen einen Schwenkbereich von wenigstens 180° aufweist. Mit anderen Worten kann bei einer bestimmten Stellung der Detektorbaugruppe die Sichtlinie der Detektorbaugruppe auf der Drehachse des virtuellen Lagers liegen.
Im allgemeinen umfasst der Suchkopf also ein Nick-Gierrahmen-System, das über ein virtuelles Lager in der Basis gelagert ist. Das virtuelle Lager und der Gierrahmen erstrecken sich zumindest teilweise derart um die zweite Achse herum, dass der Nickrahmen einen Schwenkbereich von wenigstens 180° aufweist. Insbesondere kann der Verstellbereich der ersten Achse, die die Nickachse sein kann, sowie der zweiten Achse, die die Gierachse sein kann, mehr als ±90° betragen.
Der Nickrahmen kann eine stabilisierte Plattform darstellen, auf dem ein konventionelles optisches System zusammen mit einem abbildenden Detektor beweglich gelagert ist. Auf dieser Plattform bzw. auf dem Nickrahmen kann auch eine Trägheitssensoreinheit angeordnet sein.

Auf diese Weise wird eine Lagerung für das Nick-Gier-Rahmen-System des Suchkopfs bereitgestellt und auch ein Antrieb dieses Systems ermöglicht, der mit kostengünstigen Standardkomponenten für die Optronik sowie die Aktorik ausgestattet werden kann und der eine maximale bzw. sehr große Bewegungsfreiheit für die Detektorbaugruppe ermöglicht. Zusammenfassend kann der abbildende Suchkopf für einen zielverfolgenden Flugkörper eine von Bewegungen des Flugkörpers zweiachsig entkoppelten Detektorbaugruppe enthalten, die in einer nichtrotierenden stabilisierenden Plattform, die Nick- und Gierrahmen umfasst, untergebracht ist.
Damit kann eine Singularität, wie sie etwa bei einem Suchkopf mit einem Nick-Roll-Rahmen auftreten kann, in Flugkörper-Längsachse vermieden werden.

Erfindungsgemäß ist die Schiene am Gierrahmen befestigt. Die Basis kann dabei mehrere Laufrollen umfassen, auf denen die Schiene beim Schwenken des Gierrahmens in der Basis abrollt. Die Rollen bzw. Laufräder können dabei als konventionelles Wälzlager ausgelegt sein.
Beispielsweise kann die Schiene Rollflächen umfassen, die parallel und/oder orthogonal zur zweiten Achse verlaufen und auf denen Rollen abrollen können, deren Rollachsen parallel oder orthogonal zur zweiten Achse verlaufen. Insbesondere kann die Schiene aus Stahl hergestellt sein, und der Gierrahmen aus einem weniger widerstandsfähigen Material, wie etwa Leichtmetall, hergestellt sein.
Die Schiene kann ein die zweite Achse umgebendes Kreissegment umfassen und die Rollen können sich also auf dem Kreissegment bewegen. Die Schienen und die Rollen können dabei als Kreissegmentlagerung aufgefasst werden.

Gemäß einer Ausführungsform der Erfindung umfasst der Suchkopf eine zweite Schiene, die genauso wie die erste Schiene ausgestaltet sein kann. Beispielsweise können die erste und die zweite Schiene bezüglich einer Mittelebene des Gierrahmens symmetrisch angeordnet sein. Beispielsweise können die erste und die zweite Schiene an Enden des Gierrahmens in Richtung der zweiten Achse angeordnet sein. Die erste und die zweite Schiene können identisch bzw. symmetrisch zueinander aufgebaut sein.
Gemäß einer Ausführungsform der Erfindung fixieren Rollen den Gierrahmen in Richtung der zweiten Achse. Beispielsweise können die Rollen an der Basis befestigt sein, wobei Ihre Achsen orthogonal zur zweiten Achse verlaufen. Es ist auch möglich, dass diese Rollen auf einer Lauffläche der Schienen abrollen, die in Richtung der zweiten Achse weist. Mittels dieser Rollen kann der Gierrahmen daran gehindert werden, sich in Richtung der zweiten Achse zu bewegen.

Erfindungsgemäß umfasst der Suchkopf weiter ein Antriebsband und einen Antriebsmotor. Der Antrieb der zweiten Achse kann also über wenigstens ein Antriebsband erfolgen. Das Antriebsband kann dabei derart mit dem Gierrahmen und dem Antriebsmotor in Verbindung stehen, dass eine Drehbewegung einer Motorwelle des Antriebsmotors in eine Schwenkbewegung des Gierrahmens umgewandelt wird. Beispielsweise kann der Antriebsmotor außerhalb des Gierrahmens fest mit der Basis verbunden sein, wobei die Motorwelle parallel zur zweiten Achse verläuft. Das Antriebsband, das sich in seiner Querrichtung parallel zu zweiten Achse erstreckt, kann über die Motorwelle laufen und dabei die Drehbewegung der Motorwelle auf den Gierrahmen übertragen.

Erfindungsgemäß ist das Antriebsband mit einem ersten Ende am Gierrahmen befestigt, anschließend über die Motorwelle geführt und anschließend mit einem zweiten Ende wieder am Gierrahmen befestigt. Beispielsweise kann das Antriebsband mit seinen Enden an einem Außenumfang des Gierrahmens anliegen, sich dann von diesem Außenumfang abheben und über die Motorwelle laufen. Mit einem derartigen Antriebsband kann ein Antriebsmoment linear und spielfrei auf den Gierrahmen übertragen werden.

Gemäß einer Ausführungsform der Erfindung umfasst die Basis wenigstens eine Umlenkrolle, über die das Antriebsband von einer Umfangsrichtung des Gierrahmens in Richtung Motorwelle umgelenkt wird. Mittels dieser Umlenkrolle kann das Antriebsband auch gespannt werden, so dass vom Antriebsband eine Zugkraft auf den Gierrahmen in Richtung der Motorwelle ausgeübt wird.

Erfindungsgemäß zieht das Antriebsband den Gierrahmen gegen Rollen, die an der Basis befestigt sind, um den Gierrahmen an der Basis zu halten. Die Rollen können dabei Rollachsen in Richtung der zweiten Achse aufweisen und an einer Rollfläche der Schiene abrollen, die orthogonal von der zweiten Achse weg weist. Auf diese Weise kann das Antriebsband, das insbesondere ein Stahlband sein kann, einen Teil des virtuellen Lagers des Suchkopfs bilden. Auf diese einfache Art und Weise wird das Antriebsband einerseits dazu verwendet, den Gierrahmen derart an der Basis zu fixieren, dass sich die zweite Achse in Bezug auf die Basis nicht verschieben kann, und andererseits um eine Rotationsbewegung des Gierrahmens relativ zur Basis und um die zweite Achse zu erzeugen. Ein Gegenlager für die Schienen kann also durch ein Vorspannen des Antriebsbands entfallen.
Gemäß einer Ausführungsform der Erfindung umfasst der Suchkopf ein zweites Antriebsband, wobei das erste und das zweite Antriebsband bezüglich einer Mittelebene des Gierrahmens symmetrisch angeordnet sein können. Somit kann insbesondere in Kombination mit zwei symmetrisch angeordneten Schienen erreicht werden, dass eine Kraftübertragung von der Basis in den Gierrahmen symmetrisch erfolgt.
Gemäß einer Ausführungsform der Erfindung ist der Gierrahmen U-förmig geformt, so dass er den Nickrahmen mit der Detektorbaugruppe umgreift. Die Öffnung des U's kann dabei eine Öffnung darstellen, durch die die optische Achse der Detektorbaugruppe verlaufen kann und durch die die Optik der Detektorbaugruppe nach außen blicken kann. In den Seitenflächen des U's kann das Lager für den Nickrahmen angeordnet sein, das beispielsweise über herkömmliche Kugellager umgesetzt sein kann. Die Endabschnitte des Gierrahmens, die die Stirnflächen des Gierrahmens in Richtung der zweiten Achse umfassen, können dabei die Schienen sowie die Angriffspunkte bzw. Lagerflächen für die Antriebsbänder aufweisen.

Gemäß einer Ausführungsform der Erfindung ist der Gierrahmen als Kugelabschnitt geformt. Grundsätzlich kann der Gierrahmen eine Form aufweisen, die im Wesentlichen der einer Kugel gleicht, bei der zwei gegenüberliegende Kappen und ein dazwischen liegendes Kugelsegment entfernt wurde. Durch diese Form kann ein besonders gutes Verhältnis von Steifigkeit des Gierrahmens zu seinem Eigengewicht erreicht werden.

Gemäß einer Ausführungsform der Erfindung umfasst der Nickrahmen zwei Lagerzapfen, die jeweils über ein Kugellager im Gierrahmen gelagert sind. Insbesondere können sich diese beiden Lagerzapfen von der Detektorbaugruppe entlang der ersten Achse weg erstrecken.

Gemäß einer Ausführungsform der Erfindung umfasst der Suchkopf eine Optik und einen Detektor, die als Detektorbaugruppe starr mit dem Nickrahmen verbunden sind. Mit anderen Worten kann das gesamte optische System des Suchkopfs mit Hilfe des Nickrahmens im Gierrahmen bewegt werden. Auf diese Weise entfällt eine komplizierte optische Anordnung, mit der Strahlengang auf einen starr mit dem Flugkörper verbundenen Detektor umgelenkt werden muss.

Ein weiterer Aspekt der Erfindung betrifft die Verwendung eines Suchkopfs in einem zielverfolgenden Flugkörper, so wie er oben stehend und unten stehend beschrieben ist. Insbesondere bei einem zielverfolgenden Flugkörper schafft ein derartiger Suchkopf die Möglichkeit, dass insbesondere ein Bereich vor dem Flugkörper gut beobachtet werden kann.

Ein weiterer Aspekt der Erfindung betrifft einen zielverfolgenden Flugkörper mit einem Suchkopf, so er oben stehend und unten stehend beschrieben ist. Auf diese Weise können für den Flugkörper optoelektronische Standardkomponenten verwendet werden. Da ein derartiger Suchkopf einen relativ kleinen Bauraum einnehmen kann, kann auch der Flugkörper schmal gestaltet werden, was dessen aerodynamische Eigenschaften verbessern kann.

Im Folgenden werden Ausführungsbeispiele der Erfindung mit Bezug auf die beiliegenden Figuren detailliert beschrieben.

### KURZE BESCHREIBUNG DER FIGUREN

- **Fig. 1**: zeigt eine schematische Draufsicht auf einen Suchkopf gemäß einer Ausführungsform der Erfindung.
- **Fig. 2**: zeigt eine isometrische Ansicht des Suchkopfs aus Fig. 1.
- **Fig. 3**: zeigt eine schematische Ansicht eines Flugkörpers gemäß einer Ausführungsform der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILIERTE BESCHREIBUNG VON AUSFÜHRUNGSBEISPIELEN

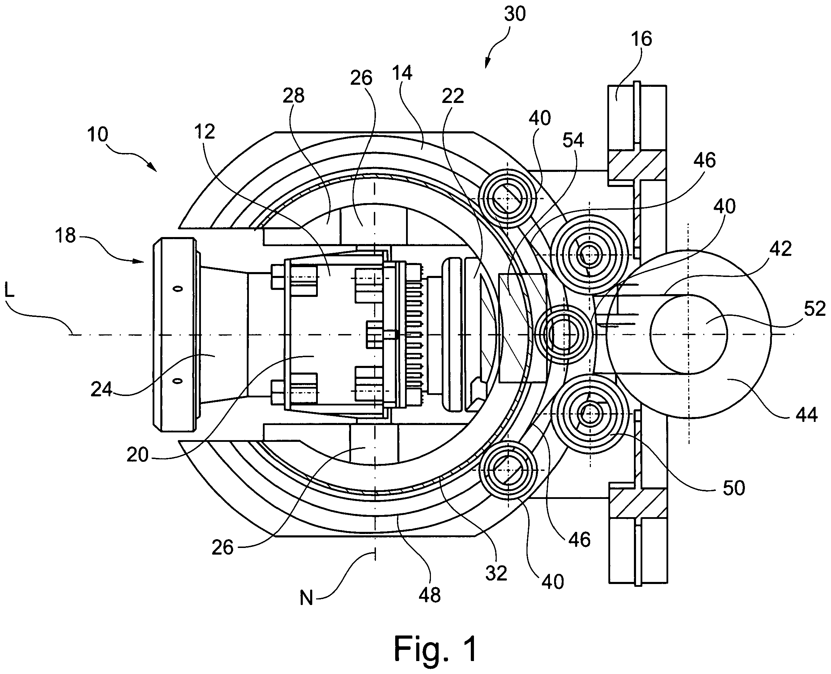

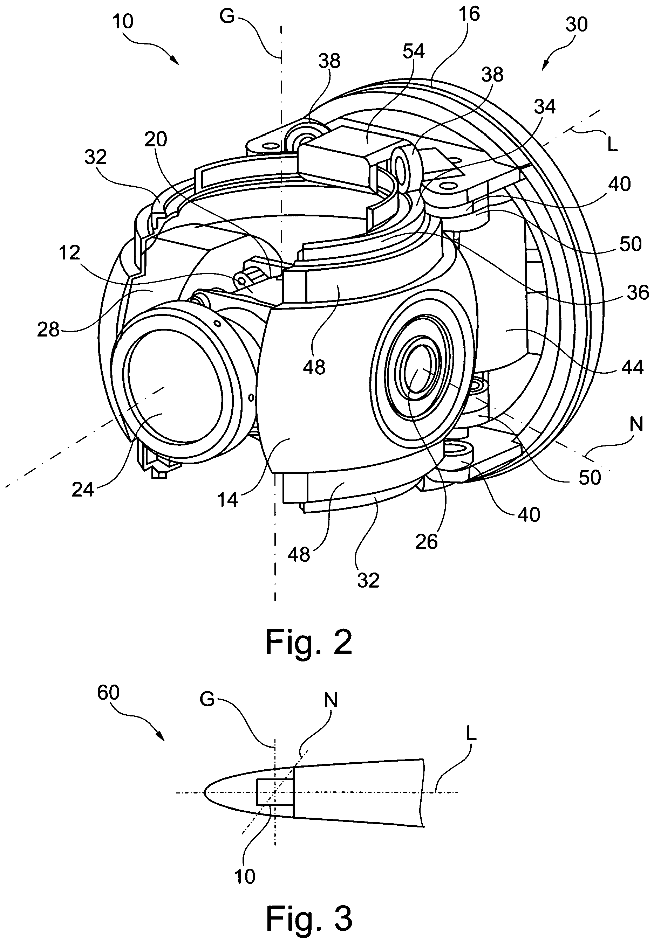

Fig. 1 zeigt schematisch eine Draufsicht auf einen Suchkopf 10, der einen Nickrahmen 12, einen Gierrahmen 14 und eine Basis 16 umfasst. In der Fig. 2 ist der Suchkopf 10 aus der Fig. 1 in dreidimensionaler Ansicht dargestellt.

Die Basis 16 weist einen um eine Längsachse L laufenden kreisförmigen Rand auf, der direkt an der Außenhaut eines abschnittsweise zylinderförmigen Flugkörpers befestigt werden kann.

Mit dem Nickrahmen 12 ist eine Detektorbaugruppe 18 mechanisch starr verbunden, die mit dem Nickrahmen 12 um eine Nickachse N bzw. erste Achse N im Gierrahmen 14 schwenken kann. Die Detektorbaugruppe 18, die über ein Verbindungsgehäuse 20 des Nickrahmens 12 mit diesem verbunden ist, umfasst einen Detektor 22 und eine Optik 24. Wie besonders gut aus der Fig. 2 hervorgeht, kann die optischen Achse der Optik 24 ohne Schwierigkeiten in Richtung einer Längsachse L des Suchkopfs 10 ausgerichtet werden und von dieser Position aus bis in Richtung einer Gierachse G des Suchkopfs 10 geschwenkt werden. Auf diese Weise kann der Nickrahmen 12 zusammen mit der Detektorbaugruppe 18 in einem Bereich von über 180° um die Nickachse N herum geschwenkt werden.

Der Nickrahmen 12 und insbesondere das Verbindungsgehäuse 20 sind über zwei Lagerbolzen 26, die sich in Richtung der Nickachse N erstrecken, im Gierrahmen 14 gelagert. Die Lagerung der Lagerbolzen 26 im Gierrahmen 14 können dabei beispielsweise Rillenkugellager in einer Festlager/Loslager-Konfiguration übernehmen. An einer Innenseite des Gierrahmens 14 ist eine Aktorik 28 angebracht, mit der die Schwenkbewegung des Nickrahmens 12 ausgeführt werden kann. Die Aktorik 28 kann dabei einen "limited angle torquer" (einen elektromechanischen Drehmomentmotor mit limitiertem Drehwinkel) und eine Winkelrückführung durch einen "brushless resolver" (einen bürstenlosen Drehwinkelgeber, der mit einem induktiven Meßprinzip arbeitet) umfassen

Das Verbindungsgehäuse 20, das den Detektor 22 mit der Optik 24 verbindet und gleichzeitig einen Bestandteil des Nickrahmens 12 darstellt, ist an Seitenflächen mit den Lagerzapfen 26 verbunden, die direkt am Verbindungsgehäuse 20 angeflanscht sein können.

Dadurch, dass die Optik 24 und Detektor 22 in einer Linie angeordnet sind, verzichtet die Optik 24 auf einen komplizierten Strahlengang (vgl. beispielsweise eine Cassegrain-Optik). Für die Optik 24 und den Detektor 22 können Standardkomponenten verwendet werden, was die Herstellungskosten des Suchkopfs 10 vermindern kann.

Zusätzlich sei noch darauf hingewiesen, dass die Länge der Nickrahmenbaugruppe, die die Detektorbaugruppe 18 und den Nickrahmen 12 umfasst, in der Regel den minimalen Durchmesser des Flugkörpers bestimmen wird.

Der Gierrahmen 14 ist an der Basis 16 um eine Gierachse G bzw. zweite Achse G gelagert. Der Gierrahmen 14 ist U-förmig gestaltet und umgreift die Detektorbaugruppe 18 und den Nickrahmen 12 von beiden Seiten. Damit stellt der Gierrahmen 14 eine U-förmige Konstruktion dar, die darüber hinaus kugelförmig ausgeführt ist, und in der sich der Nickrahmen 12 bis zu den beiden Positionen bewegen kann, in die die Detektorbaugruppe 18 in Richtung der Gierachse G weist. Die Form des Gierrahmens 14, bei der der Gierrahmen 14 im Wesentlichen einen Teil einer Kugel darstellt, bei der zwei Endkappen und ein Teilsegment weggelassen wurden, stellt einen Kompromiss aus Steifigkeit und Eigengewicht dar.

Der Gierrahmen 14 ist über ein virtuelles Lager 30 an der Basis 16 gelagert. Das virtuelle Lager 30 ist dabei so zu verstehen, dass im Bereich der Schwenkachse G des Gierrahmens 14 keine Lagerkomponenten angeordnet sind. Auf diese Weise kann die Detektorbaugruppe 18 auch in diesen Bereich schwenken, ohne dass sie durch Komponenten des Lagers der Gierachse G behindert wird. Das virtuelle Lager 30 macht es möglich, dass sich der Nickrahmen 12 und damit die Sichtlinie der Detektorbaugruppe 18 um mehr als ±90° bewegen können.

Das virtuelle Lager umfasst zwei Schienen 32, die an den Enden des Gierrahmens 14 in Richtung der Achse G angebracht sind. Jeder der Schienen 32 umfasst eine Rollfläche 34, die in Richtung der Gierachse G weist, und eine Rollfläche 36, die orthogonal von der Gierachse G weg weist. Die Schienen 32 sowie die Rollflächen 34, 36 umgeben dabei die Gierachse G auf einem Kreissegment, das die Gierachse G um etwa 270° umgibt.

An der Basis 16 sind mehrere Rollen 38, 40 befestigt, die auf den Rollflächen 34, 36 laufen. Die Lagerung des virtuellen Lagers 30 wird von den Laufrollen 38, 40 übemommen, die selber wieder mittels eines Rillenkugellagers gelagert sein können und die von den beiden Laufschienen 32 geführt werden. Die Laufschienen können dabei aus einem anderen Material als der Gierrahmen 14 gefertigt sein, beispielsweise kann der Gierrahmen 14 aus Gewichtsgründen aus Leichtmetall gefertigt sein und die Schienen 32 aus Stahl, da die Hertzsche Pressung unter den Laufrollen 38, 40 einen widerstandsfähigeren Werkstoff erforderlich machen könnte.

Die Rollen 38, die bezüglich einer Symmetrieachse des Suchkopfs 10 in der gezeigten Stellung, die von der Längsachse L und der Gierachse G aufgespannt wird, symmetrisch angeordnet sind, haben dabei Achsen, die orthogonal zur Gierachse G verlaufen und laufen bzw. rollen auf den Rollflächen 34 der Schienen 32, so dass der Gierrahmen 14 bezüglich einer Bewegung entlang der Gierachse G fixiert wird. Die Rollen 38 können dabei als zwei Rillenkugellager aufgefasst werden, die die axiale Lagerung des Gierrahmens 14 übernehmen, und die auf dem oberen/unteren Teil der Laufschienen 32 abrollen.

Die Rollen 40, die eine Achse parallel zur Gierachse G aufweisen, laufen bzw. rollen auf den Rollflächen 36 der Schienen 32 und führen so den Gierrahmen 14 auf seiner Schwenk- bzw. Rotationsbewegung um die Gierachse G. Auch die Rollen 40 sind bezüglich der durch die Achsen G und L gebildeten Ebene symmetrisch angeordnet.

Um eine möglichst gleichförmige Kraftverteilung zwischen Gierrahmen 14 und Basis 16 zu erreichen, sind die Schienen 32 und die Rollen 38, 40 bezüglich der Symmetrieebene des Suchkopfs 10, die durch die Achsen N und L gebildet wird, symmetrisch angeordnet. Auf diese Weise umfasst der Suchkopf 10 auf beiden Seiten der durch die Achsen N und L gebildeten Symmetrieebene jeweils zwei Rollen 38 und drei Rollen 40.

Der Antrieb des Gierrahmens 14 um die Gierachse G erfolgt über ein Stahlband 42, das über einen Antriebsmotor 44 angetrieben wird. Auf diese Weise kann der Antrieb des virtuellen Lagers 30 aus dem Bereich der Gierachse G ferngehalten werden. Damit wird eine platzsparende Bauform mit der Möglichkeit der Unterbringung eines im Verhältnis kräftigen Antriebsmotors 44 verbunden.

Mit seinen beiden Enden 46 ist das Antriebsband mit einer Umfangsfläche 48 des Gierrahmens 14 verbunden bzw. daran angeflanscht. Das Antriebsband 42 verläuft dabei im Bereich seiner Enden im Wesentlichen parallel zur Umfangsfläche 48, hebt dann von dieser ab, wird durch Umlenkrollen 50 in Richtung des Motors 44 gelenkt und verläuft dann im Bereich des Motors um eine Motorwelle 52. Auch die Antriebsbänder, sowie die Umlenkrollen sind symmetrisch zu der durch die Achsen N und L gebildeten Ebene angeordnet, um wieder eine gleichförmige Kraftverteilung auf den Gierrahmen 14 zu erzeugen.

Die Antriebsbänder 42 können dabei als dünnes Stahlband ausgeführt sein, die große Kräfte linear sehr gut übertragen können.

Bei dem Suchkopf 10 werden die beiden Antriebsbänder 42 darüber hinaus dazu verwendet, den Gierrahmen 14 über die Schienen 32 an die Rollen 40 und damit an die Basis 16 zu pressen. Dies wird dadurch erreicht, dass die Antriebsbänder 42 nicht nur die Funktion des Antriebs des Gierrahmens 14 übernehmen, sondern auch derart vorgespannt sind, so dass der Gierrahmen 14 gegen die Basis 16 gepresst wird. Mit einer ausreichenden Vorspannung kann auf ein Gegenlager zu den Rollen 40 verzichtet werden. Dabei kann die Vorspannung des Antriebsbands 42 so ausgelegt sein, dass keine Betriebslast, Vibration oder Beschleunigung ein Abheben der Laufrollen 40 von den Laufschienen 32 bewirkt. Durch die symmetrische Anordnung der Antriebsbänder 32 bezüglich der durch die Achsen N und L gebildeten Ebene wird die Vorspannung gleichmäßig auf den Gierrahmen 14 übertragen.

Auch der Motor 44 ist bezüglich der durch die Achsen N und L gebildeten Ebene symmetrisch angeordnet, wobei die Motorwelle 52 gleichzeitig mit beiden Antriebsbändern 42 einerseits oberhalb und andererseits unterhalb der Symmetrieebene verbunden ist.

Am in Bezug auf die Fig. 2 gesehenen oberen Ende weist der Suchkopf 10 einen Winkelsensor 54 auf, der einen an der Basis 16 befestigten Sensor und ein am Gierrahmen 14 befestigtes Messband aufweist.

Die Fig. 3 zeigt schematisch einen Flugkörper 60, der in seiner Spitze einen Suchkopf 10, so wie er in den Figuren 1 und 2 dargestellt ist, umfasst. Die Spitze des Flugkörpers 60 kann dabei aus einem durchsichtigen Material bestehen, so dass die Detektorbaugruppe 18 eine Sicht auf das Gebiet, das vor dem Flugkörper 60 liegt, hat. In der Fig. 3 sind auch die drei Achsen N, G, L eingezeichnet, die den entsprechenden Achsen in den Figuren 1 und 2 entsprechen. Wie aus der Fig. 3 hervorgeht, kann die Längsachse L auch die Längsachse des Flugkörpers 60, in der sich der Flugkörper 60 in der Regel bewegt. Die Achse N ist gleichzeitig auch die Nickachse des Flugkörpers 60, die Gierachse G ist gleichzeitig auch die Gierachse des Flugkörpers 60. Dabei ist aber zu verstehen, dass der Suchkopf 10 auch in einer anderen Orientierung in einem Flugkörper 60 eingebaut werden kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- L: Längsachse
- N: Nickachse
- G: Gierachse
- 10: Suchkopf
- 12: Nickrahmen
- 14: Gierrahmen
- 16: Basis
- 18: Detektorbaugruppe
- 20: Verbindungsgehäuse
- 22: Detektor
- 24: Optik
- 26: Lagerzapfen
- 28: Aktorik
- 30: virtuelles Lager
- 32: Schiene
- 34: Rollfläche
- 36: Rollfläche
- 38: Rolle
- 40: Rolle
- 42: Antriebsband
- 44: Antriebsmotor
- 46: Ende des Antriebsbands
- 48: Umfangsfläche
- 50: Umlenkrolle
- 52: Motorwelle
- 54: Winkelsensor
- 60: Flugkörper

## Patentansprüche

1. Suchkopf (10) für einen zielverfolgenden Flugkörper (60), der Suchkopf (10) umfassend:
einen Nickrahmen (12) zur Aufnahme einer Detektorbaugruppe (18),
einen Gierrahmen (14), in dem der Nickrahmen (12) schwenkbar um eine erste Achse (N) gelagert ist,
eine Basis (16), in der der Gierrahmen (14) schwenkbar um eine zweite Achse (G) gelagert ist,
ein Antriebsband (42) und einen Antriebsmotor (44),
wobei der Gierrahmen (14) über eine Schiene (32) an der Basis (16) gelagert ist,
wobei die Schiene (32) und der Gierrahmen (14) sich zumindest teilweise derart um die zweite Achse (G) herum erstrecken, dass der Nickrahmen (14) einen Schwenkbereich von wenigstens 180° aufweist,
wobei die Schiene (32) am Gierrahmen (14) befestigt ist und die Basis (16) mehrere Laufrollen (40) umfasst, deren Rollachsen parallel zur zweiten Achse (G) verlaufen und die an einer Rollfläche der Schiene (32) beim Schwenken des Gierrahmens (14) in der Basis (16) abrollen, die orthogonal von der zweiten Achse (G) weg weist,
wobei das Antriebsband (42) derart mit dem Gierrahmen (14) und dem Antriebsmotor (44) verbunden ist, dass eine Drehbewegung einer Motorwelle (52) des Antriebsmotors (44) in eine Schwenkbewegung des Gierrahmens (14) umgewandelt wird,
wobei das Antriebsband (42) mit einem ersten Ende (46) und mit einem zweiten Ende (46) am Gierrahmen (14) befestigt ist und über die Motorwelle (52) geführt ist, und
wobei das Antriebsband (42) derart vorgespannt ist, dass der Gierrahmen (14) gegen die Basis (16) gepresst und ausschließlich durch das Antriebsband (42) an der Basis (16) gehalten wird.

2. Suchkopf (10) nach Anspruch 1,
wobei die Schiene (32) eine erste Schiene ist und der Suchkopf (10) eine zweite Schiene (32) umfasst,
wobei die erste und die zweite Schiene (32) bezüglich einer Mittelebene des Gierrahmens (14) symmetrisch angeordnet sind.

3. Suchkopf (10) nach Anspruch 1 oder 2,
wobei Rollen (38) den Gierrahmen (14) in Richtung der zweiten Achse (G) fixieren.

4. Suchkopf (10) nach einem der vorhergehenden Ansprüche,
wobei die Basis (16) eine Umlenkrolle (50) umfasst, über die das Antriebsband (42) von einer Umfangsfläche (48) des Gierrahmens (14) in Richtung Motorwelle (52) umgelenkt wird.

5. Suchkopf (10) nach einem der vorhergehenden Ansprüche, weiter umfassend:
ein zweites Antriebsband (42),
wobei das erste und das zweite Antriebsband (42) bezüglich einer Mittelebene des Gierrahmens (14) symmetrisch angeordnet sind.

6. Suchkopf (10) nach einem der vorhergehenden Ansprüche,
wobei der Gierrahmen (14) U-förmig geformt ist und den Nickrahmen (12) mit der Detektorbaugruppe (18) umgreift.

7. Suchkopf (10) nach einem der vorhergehenden Ansprüche,
wobei der Gierrahmen (14) als Kugelabschnitt geformt ist.

8. Suchkopf (10) nach einem der vorhergehenden Ansprüche,
wobei der Nickrahmen (12) zwei Lagerzapfen (26) umfasst, die jeweils über ein Kugellager im Gierrahmen (14) gelagert sind.

9. Suchkopf (10) nach einem der vorhergehenden Ansprüche,
wobei der Suchkopf eine Optik (24) und einen Detektor (22) umfasst, die als Detektorbaugruppe (18) starr mit dem Nickrahmen (12) verbunden sind.

10. Verwendung eines Suchkopfs (10) in einem zielverfolgenden Flugkörper (60) gemäß einem der Ansprüche 1 bis 9.

11. Zielverfolgender Flugkörper (60) mit einem Suchkopf (10) gemäß einem der Ansprüche 1 bis 9.

## Claims

1. Seeker (10) for a target-tracking missile (60), the seeker (10) comprising:
a pitch frame (12) to accommodate a detector assembly (18),
a yaw frame (14), wherein the pitch frame (12) is mounted pivotably around a first axis (N),
a base (16) wherein the yaw frame (14) is mounted pivotably around a second axis (G),
a drive belt (42) and a drive motor (44),
wherein the yaw frame (14) is mounted on the base (16) by means of a rail (32),
wherein the rail (32) and the yaw frame (14) extend at least partially around the second axis (G) such that the pitch frame (14) exhibits a pivot range of at least 180°,
wherein the rail (32) is fastened on the yaw frame (14) and the base (16) comprises a plurality of rollers (40),
whose roller axes are aligned parallel to the second axis (G) and roll off on a roller face of the rail (32) during pivoting of the yaw frame (14) in the base (16), which faces away from the second axis (G) orthogonally,
wherein the drive belt (42) is connected to the yaw frame (14) and the drive motor (44) such that a rotary movement of a motor shaft (52) of the drive motor (44) is converted into a pivoting movement of the yaw frame (14),
wherein the drive belt (42) at its first end (46) and at its second end (46) is fastened on the yaw frame (14) and is guided via the motor shaft (52), and
wherein the drive belt (42) is pre-tensioned such that the yaw frame (14) is pressed against the base (16) and is held on the base (16) exclusively by means of the drive belt (42).

2. Seeker (10) according to claim 1,
wherein the rail (32) is a first rail and the seeker (10) comprises a second rail (32),
wherein the first and second rail (32) are arranged symmetrically in respect of a central plane of the yaw frame (14).

3. Seeker (10) according to claim 1 or 2,
wherein rollers (38) fix the yaw frame (14) in the direction of the second axis (G).

4. Seeker (10) according to any one of the preceding claims, wherein the base (16) comprises a guide pulley (50) via which the drive belt (42) is deflected from a circumferential face (48) of the yaw frame (14) in the direction of the motor shaft (52).

5. Seeker (10) according to any one of the preceding claims, further comprising:
a second drive belt (42),
wherein the first and the second drive belt (42) are arranged symmetrically in respect of a central plane of the yaw frame (14).

6. Seeker (10) according to any one of the preceding claims, wherein the yaw frame (14) is U-shaped in design and grips the pitch frame (12) with the detector assembly (18) .

7. Seeker (10) according to any one of the preceding claims, wherein the yaw frame (14) is shaped as a portion of a sphere.

8. Seeker (10) according to any one of the preceding claims, wherein the pitch frame (12) comprises two trunnions (26) which are each mounted via a ball-bearing in the yaw frame (14).

9. Seeker (10) according to any one of the preceding claims, wherein the seeker comprises optics (24) and a detector (22) which are rigidly connected to the pitch frame (12) as a detector assembly (18).

10. Use of a seeker (10) in a target-tracking missile (60) according to any one of claims 1 to 9.

11. Target-tracking missile (60) with a seeker (10) according to any one of claims 1 to 9.

## Revendications

1. Autodirecteur (10) pour un missile (60) poursuivant une cible, l'autodirecteur (10) comprenant :
un cadre de tangage (12) pour recevoir un ensemble détecteur (18),
un cadre de lacet (14), dans lequel le cadre de tangage (12) est monté pivotant autour d'un premier axe (N),
une base (16), dans laquelle le cadre de lacet (14) est monté pivotant autour d'un second axe (G),
une bande d'entraînement (42) et un moteur d'entraînement (44),
dans lequel le cadre de lacet (14) est monté par le biais d'une glissière (32) sur la base (16),
dans lequel la glissière (32) et le cadre de lacet (14) s'étendent au moins en partie autour du second axe (G) de telle sorte que le cadre de tangage (14) présente une plage de pivotement d'au moins 180°,
dans lequel la glissière (32) est fixée au cadre de lacet (14) et la base (16) comprend plusieurs galets de roulement (40) dont les axes de roulement s'étendent parallèlement au second axe (G) et qui se déroulent sur une surface de roulement de la glissière (32) lors du pivotement du cadre de lacet (14) dans la base (16) qui s'écarte orthogonalement du second axe (G),
dans lequel la bande d'entraînement (42) est reliée au cadre de lacet (14) et au moteur d'entraînement (44) de telle sorte qu'un mouvement de rotation d'un arbre de moteur (52) du moteur d'entraînement (44) est transformé en un mouvement de pivotement du cadre de lacet (14),
dans lequel la bande d'entraînement (42) est fixée à une première extrémité (46) et à une seconde extrémité (46) sur le cadre de lacet (14) et passe par l'arbre de moteur (52), et
dans lequel la bande d'entraînement (42) est précontrainte de telle sorte que le cadre de lacet (14) est pressé contre la base (16) et est maintenu sur la base (16) exclusivement par la bande d'entraînement (42).

2. Autodirecteur (10) selon la revendication 1,
dans lequel la glissière (32) est une première glissière et l'autodirecteur (10) comprend une seconde glissière (32),
dans lequel première et la seconde glissière (32) sont disposés symétriquement par rapport à un plan médian du cadre de lacet (14).

3. Autodirecteur (10) selon la revendication 1 ou 2,
dans lequel des rouleaux (38) fixent le cadre de lacet (14) en direction du second axe (G).

4. Autodirecteur (10) selon une des revendications précédentes,
dans lequel la base (16) comprend une poulie de renvoi (50) qui permet de renvoyer la bande d'entraînement (42) d'une surface circonférentielle (48) du cadre de lacet (14) en direction de l'arbre de moteur (52).

5. Autodirecteur (10) selon une des revendications précédentes, comprenant en outre :
une seconde bande d'entraînement (42),
dans lequel la première et la seconde bande d'entraînement (42) sont disposées symétriquement par rapport à un plan médian du cadre de lacet (14).

6. Autodirecteur (10) selon une des revendications précédentes,
dans lequel le cadre de lacet (14) a la forme d'un U et entoure le cadre de tangage (12) avec l'ensemble détecteur (18).

7. Autodirecteur (10) selon une des revendications précédentes,
dans lequel le cadre de lacet (14) est façonné sous la forme d'une section sphérique.

8. Autodirecteur (10) selon une des revendications précédentes,
dans lequel le cadre de tangage (12) comprend deux tourillons (26) qui sont montés respectivement par le biais d'un palier à billes dans le cadre de lacet (14).

9. Autodirecteur (10) selon une des revendications précédentes,
dans lequel l'autodirecteur comprend une optique (24) et un détecteur (22) qui sont reliés rigidement au cadre de tangage (12) sous la forme d'un l'ensemble détecteur (18) .

10. Utilisation d'un autodirecteur (10) dans un missile (60) poursuivant une cible selon une des revendications 1 à 9.

11. Missile (60) poursuivant une cible comportant un autodirecteur (10) selon une des revendications 1 à 9.
